(19) Europäisches Patentamt / European Patent Office / Office européen des brevets

(11) **EP 3 513 171 B1**

(12) **FASCICULE DE BREVET EUROPEEN**

(45) Date de publication et mention de la délivrance du brevet:
**06.04.2022 Bulletin 2022/14**

(21) Numéro de dépôt: **16838089.7**

(22) Date de dépôt: **16.09.2016**

(51) Classification Internationale des Brevets (IPC):
**G01N 21/47** (2006.01)   **G01B 11/30** (2006.01)
**G01N 21/59** (2006.01)   **G01N 21/85** (2006.01)
**G01N 21/88** (2006.01)   **G02B 5/28** (2006.01)

(52) Classification Coopérative des Brevets (CPC):
**G01N 21/85; G01B 11/30; G01N 21/4738; G01N 21/59; G01N 21/8806; G02B 5/285**

(86) Numéro de dépôt international:
**PCT/FR2016/052352**

(87) Numéro de publication internationale:
**WO 2018/050972 (22.03.2018 Gazette 2018/12)**

(54) **DISPOSITIF OPTIQUE DE CARACTÉRISATION D'UN ÉCHANTILLON**

OPTISCHE VORRICHTUNG ZUR CHARAKTERISIERUNG EINER PROBE

OPTICAL DEVICE FOR CHARACTERISATION OF A SAMPLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**24.07.2019 Bulletin 2019/30**

(73) Titulaires:
• **Centre National de la Recherche Scientifique**
  **75016 Paris (FR)**
• **Université d'Aix Marseille**
  **13284 Marseille Cedex 07 (FR)**

(72) Inventeurs:
• **ZERRAD, Myriam**
  **13001 Marseille (FR)**
• **LEQUIME, Michel**
  **13120 Gardanne (FR)**
• **AMRA, Claude**
  **13013 Marseille (FR)**

(74) Mandataire: **INNOV-GROUP**
  **310, avenue Berthelot**
  **69372 Lyon Cedex 08 (FR)**

(56) Documents cités:
WO-A1-2006/063094   WO-A1-2015/116153
US-A1- 2014 262 027   US-A1- 2016 153 914

**Description**

La présente invention concerne un dispositif optique de caractérisation d'un échantillon ou d'un objet. Une telle caractérisation peut aboutir à déterminer par exemple un état de surface, notamment un paramètre de rugosité, en particulier pour une analyse non destructive d'une surface par exemple polie.

Une telle caractérisation peut aussi aboutir à la caractérisation d'un état de volume d'un objet, par exemple pour déterminer un paramètre d'hétérogénéité.

De tels dispositifs optiques de caractérisation permettent par exemple l'examen de l'état de surface de pièces polies, en particulier dans le cadre de la détection de conformité et du contrôle de leur rugosité. Ainsi, un domaine d'application privilégié de l'invention concerne le contrôle de qualité dans des chaînes de fabrication de pièces en série où une qualité élevée de l'état de surface est requise et nécessite une vérification de la qualité de telles pièces par une analyse de leur état de surface, donc notamment d'une rugosité résultant d'un défaut de polissage d'une pièce mécanique polie.

La caractérisation d'une surface est également importante pour par exemple étalonner les procédés de polissage, qui sont eux aussi indispensables pour limiter les pertes par diffusion lumineuse dans les composants optiques (multicouches, réseaux, cristaux photoniques...). Au vu de la croissante importance de l'optronique dans l'industrie, notamment pour les télécommunications, des procédés de mesures ou la construction d'ordinateurs à base de composants optroniques, on comprend qu'il est nécessaire de disposer d'un dispositif optique de caractérisation fiable et permettant une mesure rapide d'un état de surface d'un objet.

Sans être limitatif, un caractère stratégique similaire apparaît d'ailleurs dans le domaine des textiles voire du biomédical, par exemple pour la peau, le textile ou l'industrie du papier, la sécurité, la microélectronique, ou encore la cosmétique.

Dans l'état de la technique, on connaît l'utilisation d'un rugosimètre à palpeur pour déterminer la rugosité d'une surface.

Cependant, ces contrôles durent relativement longtemps, car on doit relever la rugosité par contact et segment par segment.

De plus, du fait de la taille des palpeurs, on ne peut pas détecter des défauts en dessous d'une certaine taille et plus les défauts à détecter sont petits, plus le procédé est long.

Il est également connu d'utiliser d'autres techniques comme la microscopie électronique ou optique ou de champ proche, ainsi que des technique basées sur la diffusion de la lumière en champ lointain.

Ces techniques permettent d'assurer un contrôle rapide des états de surface, réalisable en une durée courte.

Parmi ces techniques, en particulier celles basées sur la diffusion de lumière en champ lointain paraissent intéressantes, car elles sont non intrusives et elles permettent d'exploiter les conséquences des phénomènes de diffusion relevant des théories ondulatoires de la lumière pour extraire, de manière quasiment instantanée, des propriétés dérivées de la surface de la pièce examinée faisant ressortir des irrégularités telles que des petites rayures ou des rugosités locales qui seraient totalement invisibles à l'œil nu.

Pour ce faire, on mesure tout d'abord la lumière que diffuse un objet / échantillon à observer dans tout l'espace, en réflexion ou transmission, par exemple à l'aide d'une sphère intégrante réalisant une mesure unique de la diffusion totale intégrée dans tout l'espace.

Cependant, cette caractérisation s'avère insuffisante, notamment parce qu'elle ne tient pas compte de la notion de bande passante ou de résolution spatiale.

Pour pallier cette difficulté, les techniques de mesure ont été perfectionnées en mesurant la diffusion émise par l'échantillon dans chaque direction de l'espace. On parle alors de diffusion angulaire, dite encore Angle-Resolved-Scattering (ARS) en anglais.

Toutefois, pour obtenir un résultat précis, on doit réaliser un balayage sur l'angle de diffusion, ce qui nécessite une mécanique précise pour déplacer le détecteur de la lumière diffusée, ce qui est complexe et coûteux et à nouveau un processus d'analyse assez lent.

Enfin, on connaît aussi par exemple une semi-sphère intégrante équipée au sommet d'un capteur de mesure de la lumière diffusée et avec plusieurs dizaines de sources de lumières réparties sur la semi-sphère qui permettent d'éclairer l'objet / l'échantillon à analyser sous différents angles.

Dans ce cas, on allume tour à tour chaque source de lumière et on prend une image de la lumière diffusée par chacune des sources de lumière. On obtient donc autant d'images de la lumière diffusée que de sources de lumière fixées sur la semi-sphère. Ce procédé est certes très précis, mais nécessite la manipulation d'un volume très important de données, ce qui le rend aussi trop lent pour certains processus industriel.

D'autres documents pertinents traitant de la caractérisation des échantillons sont WO 2006/063094 A1, WO 2015/116153 A1 et US 2014/262027 A1.

La présente invention vise à pallier au moins partiellement les inconvénients des dispositifs de l'état de la technique en proposant un dispositif permettant la caractérisation par voie optique d'un échantillon ou d'un objet, par exemple son état de surface ou l'hétérogénéité de volume par une prise de vue dans une seule direction.

A cet effet, l'invention propose un dispositif optique de caractérisation d'un échantillon selon la revendication 1 comprenant

- une source de lumière parallèle ou collimatée, ayant un spectre d'émission continue sur une plage d'observation en longueur d'onde d'au moins 50nm de largeur pour éclairer ledit échantillon,
- un détecteur de la lumière diffusée par l'échantillon, fonctionnant dans ladite plage d'observation en longueur d'onde,
- un filtre de pondération spectrale disposé sur le chemin optique en amont du détecteur de la lumière diffusée, et
- une unité de traitement du signal de mesure pour extraire un paramètre de caractérisation de l'échantillon, caractérisé en ce que le filtre de pondération spectrale possède dans ladite plage d'observation en longueur d'onde une fonction de filtrage spectral T($\lambda$), en réflexion ou transmission, donnée par l'équation suivante :

$$T(\lambda) = \eta \ /[\lambda^3 \ \Psi(i_0, \theta_0, \lambda) \ F(\lambda) \ K(\lambda)]$$

où

- $\eta$ est une constante de proportionnalité,
- $\lambda$ est la longueur d'onde,
- $\theta_0$ est la direction de diffusion ou d'observation de la lumière,
- $i_0$ est l'angle d'incidence d'éclairement de l'échantillon par la source de lumière,
- $F(\lambda)$ est la densité spectrale de puissance de la source dans la plage d'observation en longueur d'onde,
- $K(\lambda)$ est la réponse spectrale du détecteur dans la plage d'observation en longueur d'onde,
- $\Psi(1_0, \theta_0, \lambda) = C (i_0, \theta_0, \lambda)$ en cas de caractérisation d'une surface de l'échantillon et $\Psi(1_0, \theta_0, \lambda) = D (i_0, \theta_0, \lambda)$ , en cas de caractérisation d'un volume de l'échantillon
- $C (i_0, \theta_0, \lambda)$ est un coefficient optique donné par les théories perturbatives de la diffusion de la lumière par une surface rugueuse,
- $D (i_0, \theta_0, \lambda)$ est un coefficient optique issu cette fois des théories perturbatives de la diffusion par les volumes hétérogènes.

Le dispositif optique de caractérisation selon l'invention se distingue par la rapidité des mesures, sa compacité et sa simplicité. En effet, ce dispositif optique de caractérisation fonctionne via une mesure unique dans une seule direction d'éclairement ou de diffusion. Aucun balayage, ni en longueur d'onde ni spatial ou angulaire n'est requis.

Le filtre de pondération permet ainsi de faire en sorte que la mesure de diffusion dans une seule direction et en lumière blanche, soit, dans le mode caractérisation de surface, proportionnelle à la rugosité de la surface éclairée et dans le mode caractérisation de volume, proportionnelle à l'hétérogénéité du milieu composant l'échantillon ou l'objet.

Cela est très avantageux en particulier quand on veut caractériser des échantillons dont l'accès et/ou la manipulation sont difficiles, voire impossibles, ou quand ces échantillons ne peuvent être éclairés ou mesurés que dans certaines directions particulières.

Ces remarques s'appliquent à la fois pour les objets ou échantillons à caractériser en laboratoire ou centre d'études, mais aussi pour une caractérisation à longue distance comme cela peut être le cas avec des satellites ou autres systèmes embarqués.

Le dispositif de détection selon l'invention peut comporter une ou plusieurs des caractéristiques suivantes prises seules ou en combinaison :

Selon un aspect, la source de lumière peut être choisie parmi le groupe suivant : une lampe à incandescence, un laser à lumière blanche, une diode à lumière blanche, un laser à super-continuum non filtré.

Selon un autre aspect, le détecteur de la lumière diffusée comprend un capteur CCD ou capteur CMOS.

Le filtre de pondération spectrale est par exemple disposé entre l'échantillon et le détecteur de la lumière diffusée, ou bien entre la source de lumière et l'échantillon.

Le filtre de pondération comprend par exemple un empilement de couches minces.

L'empilement de couches minces peut être déposé par des technologies de dépôt de couches semi-conductrices ou de couches minces optiques.

L'empilement de couches minces comprend par exemple au moins un premier matériau ayant un premier indice de réfraction et un second matériau ayant un second indice de réfraction, différent du premier indice de réfraction, et disposés en alternance.

Selon un exemple de réalisation, la différence entre le premier et le second indice de réfraction est supérieure à 0,4.

Les couches possèdent à titre d'exemple une épaisseur inférieure à 350nm, notamment comprise entre 20nm et 325nm. De façon plus générale, l'épaisseur des couches a pour ordre de grandeur une fraction de la longueur d'onde moyenne de la source de lumière.

Selon un mode de réalisation particulier, le premier matériau est de la silice et le second matériau de l'oxyde de Tantale.

De façon plus générale, les filtres peuvent être réalisés avec toute une multitude de matériaux diélectriques comme les oxydes, les nitrures, les sulfures..., et peuvent même inclure de fines couches métalliques ou semi-conductrices.

Selon encore un autre aspect, en présence du filtre de pondération spectrale configuré pour une diffusion surfacique, l'unité de traitement est programmée pour extraire la rugosité $\delta$ de la surface de l'échantillon en utilisant la formule suivante:

$$\delta^2 = [v(\theta_0)/(\eta\Delta\Omega)]\ [2\pi(n_0\sin\theta_0)^2]$$

où

- $\theta_0$ est l'angle de la direction de détection
- $n_0$ est l'indice optique de réfraction du milieu dans lequel s'effectue la mesure (en général l'air, où $n_0 \approx 1$)
- $\Delta Q$ est l'angle solide de mesure de la détection
- $\eta$ est la constante de proportionnalité associée précédemment au filtre de pondération
- $v(\theta_0)$ est le signal délivré par le détecteur de diffusion dans la direction $\theta_0$ quand l'échantillon est éclairé avec la source de lumière.

Selon encore un autre aspect, en présence d'un filtre de pondération spectrale configuré pour une diffusion volumique, l'unité de traitement est programmée pour extraire un écart-type normalisé de l'hétérogénéité ($\Delta n/n$) du volume de l'échantillon en utilisant la formule suivante :

$$(\Delta n/n)^2 = (1/4)\ [v(\theta_0)/(\eta\Delta\Omega)]\ [2\pi(n_0\sin\theta_0)^2]$$

où

- $\theta_0$ est l'angle de la direction de détection
- $n_0$ est l'indice optique de réfraction du milieu dans lequel s'effectue la mesure (en général l'air, où $n_0 \approx 1$)
- $\Delta\Omega$ est l'angle solide de mesure de la détection
- $\eta$ est la constante de proportionnalité associée précédemment au filtre de pondération

Dans ce cas, $v(\theta_0)$ est le signal délivré par le détecteur de diffusion dans la direction $\theta_0$ quand l'échantillon est éclairé avec la source de lumière.

Et la mesure $v(\theta_0)$ est cette fois une mesure de diffusion volumique de la lumière.

L'invention concerne également un procédé de caractérisation d'un échantillon selon la revendication 13 comprenant les étapes suivantes :

- on éclaire un échantillon avec une source de lumière parallèle ou collimatée ayant un spectre d'émission continue sur une plage d'observation en longueur d'onde d'au moins 50nm de largeur,
- on détecte la lumière diffusée par l'échantillon, un filtre de pondération spectrale de la source de lumière étant disposé sur le chemin optique en amont du détecteur de la lumière diffusée, et
- extrait un paramètre de caractérisation de l'échantillon,

caractérisé en ce que le filtre de pondération spectrale possède dans ladite plage d'observation en longueur d'onde une fonction de filtrage spectral T($\lambda$), en réflexion ou transmission, donnée par l'équation suivante :

$$T(\lambda) = \eta\ /[\lambda^3\ \Psi(i_0, \theta_0,\lambda)\ F(\lambda)\ K(\lambda)]$$

où

- $\eta$ est une constante de proportionnalité,

- $\lambda$ est la longueur d'onde,
- $\theta_0$ est la direction de diffusion de la lumière,
- $i_0$ est l'angle d'incidence d'éclairement de l'échantillon par la source de lumière,
- $F(\lambda)$ est la densité spectrale de puissance de la source dans la plage d'observation en longueur d'onde,
- $K(\lambda)$ est la réponse spectrale du détecteur dans la plage d'observation en longueur d'onde,
- $\Psi(i_0,\theta_0,\lambda) = C(i_0, \theta_0,\lambda)$ en cas de caractérisation d'une surface de l'échantillon et $\Psi(1_0, \theta_0,\lambda) = D(i_0, \theta_0,\lambda)$, en cas de caractérisation d'un volume de l'échantillon
- $C(i_0,\theta_0,\lambda)$ est un coefficient optique donné par les théories perturbatives de la diffusion de la lumière par une surface rugueuse,
- $D\ i_0,\theta_0,\lambda)$ est un coefficient optique issu cette fois des théories perturbatives de la diffusion par les volumes hétérogènes.

Le procédé selon l'invention peut comporter une ou plusieurs des caractéristiques suivantes prises seules ou en combinaison :

Selon un aspect, en présence du filtre de pondération configuré pour une diffusion surfacique, on extrait la rugosité de la surface de l'échantillon $\delta$ en utilisant la formule suivante:

$$\delta^2 = [v(\theta_0)/(\eta\Delta\Omega)]\ [2\pi(n_0\sin\theta_0)^2]$$

où

- $\theta_0$ est l'angle de la direction de détection
- $n_0$ est l'indice optique de réfraction du milieu dans lequel s'effectue la mesure (en général l'air, où $n_0 \approx 1$)
- $\Delta\Omega$ est l'angle solide de mesure de la détection
- $\eta$ est la constante de proportionnalité associée précédemment au filtre de pondération
- $v(\theta_0)$ est le signal délivré par le détecteur de diffusion dans la direction $\theta_0$ quand l'échantillon est éclairé avec la source de lumière.

Selon encore un autre aspect, en présence d'un filtre de pondération spectrale configuré pour une diffusion volumique, on extrait un écart-type normalisé de l'hétérogénéité $(\Delta n/n)$ du volume de l'échantillon en utilisant la formule suivante :

$$(\Delta n/n)^2 = (1/4)\ [v(\theta_0)/(\eta\Delta\Omega)]\ [2\pi(n_0\sin\theta_0)^2]$$

où

- $\theta_0$ est l'angle de la direction de détection
- $n_0$ est l'indice optique de réfraction du milieu dans lequel s'effectue la mesure (en général l'air, où $n_0 \approx 1$)
- $\Delta\Omega$ est l'angle solide de mesure de la détection
- $\eta$ est la constante de proportionnalité associée précédemment au filtre de pondération,
- $v(\theta_0)$ est le signal délivré par le détecteur de diffusion dans la direction $\theta_0$ quand l'échantillon est éclairé avec la source de lumière.

D'autres avantages et caractéristiques apparaîtront à la lecture de la description de l'invention, ainsi que des figures suivantes parmi lesquelles :

- la figure 1 montre un schéma d'un dispositif de détection selon l'invention,
- la figure 2 montre sur un graphe en fonction de la longueur d'onde les variations spectrales d'un exemple d'une source de lumière et celles d'un détecteur de la lumière diffusée ainsi que de leur produit,
- la figure 3 montre sur un graphe en fonction de la longueur d'onde la variation spectrale d'une fonction de pondération,
- la figure 4 montre un exemple d'un filtre de pondération pour un dispositif d'éclairement et de détection de la figure 1,
- la figure 5 (composé de l'ensemble des figures 5-1, 5-2, et 5-3) reproduit dans un tableau les caractéristiques structurelles d'un mode de réalisation d'un filtre de pondération,

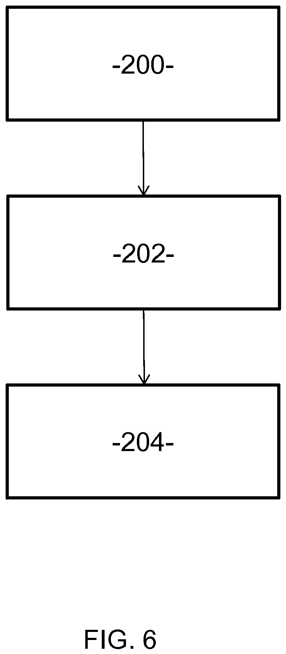

- la figure 6 montre les différentes étapes du procédé selon l'invention.

Sur les figures, les éléments identiques sont identifiés par les mêmes références.

Les réalisations suivantes sont des exemples de modes de réalisation non limitatifs. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations, selon la portée des revendications annexées.

Dans la description on peut indexer certains éléments ou paramètres, comme par exemple premier élément ou second élément ainsi que premier paramètre et second paramètre ou encore premier critère et second critère etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description.

Dans le présent exposé, par « filtre spectral de pondération », on entend un dispositif optique qui modifie la répartition spectral d'un rayonnement incident, comme par exemple un filtre interférentiel, des micro-miroirs, ou des spectromètres.

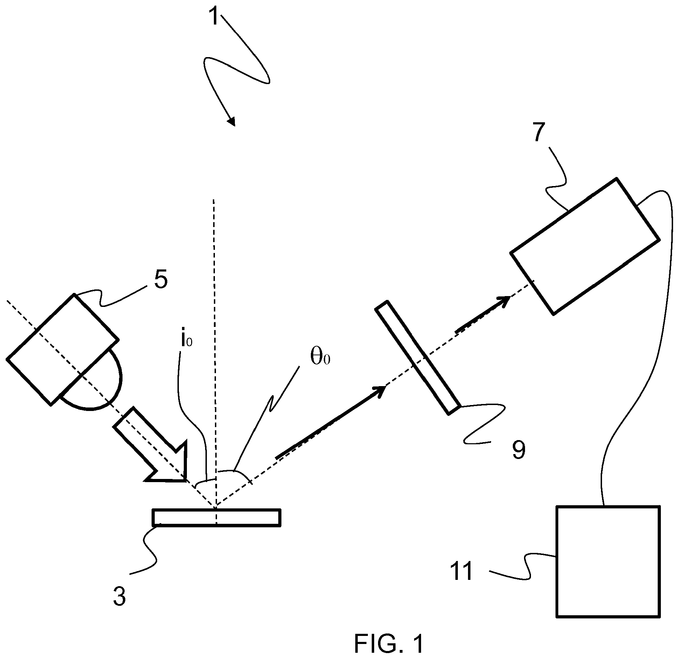

La figure 1 montre de façon schématique un exemple de réalisation d'un mode de réalisation d'un dispositif optique 1 de caractérisation d'un échantillon 3 ou d'un objet.

Les mots échantillon et objet (objet d'étude) sont ici utilisés comme des synonymes. L'échantillon peut être plan ou avoir une certaine forme.

L'objet ou l'échantillon peut être par exemple un substrat de verre, métal ou semi-conducteur. Il peut également s'agir d'un substrat organique, voire d'un tissu biologique ou végétal. Ces objets ou échantillons peuvent être liés à des applications optiques, mécaniques, de textiles ou papèterie. Les objets peuvent également être liquides ou gazeux.

Ce dispositif optique 1 de caractérisation d'un échantillon 3 comprend pour l'éclairage de l'échantillon 3 une source 5 de lumière parallèle ayant un spectre d'émission continue sur une plage d'observation en longueur d'onde d'au moins 50nm, notamment 100nm voire tout le spectre visible entre 400nm et 750nm et/ ou une partie du spectre IR.

De façon plus générale le spectre de la source devra être étendu, en opposition avec le spectre d'un laser monochromatique. En conséquence la source sera dite « blanche », et elle pourra également être constituée de n'importe quelle source à spectre « large », dont les diodes ou laser blancs etc...

Par défaut on pourra considérer que l'adjectif « large » signifie que la largeur spectrale est comprise entre 50nm et 1000nm, et ceci sachant que les performances de l'instrument vont croître avec cette largeur spectrale. A noter ici que la largeur spectrale de la source, associée aux directions de mesure, fixeront la résolution spatiale et la fenêtre fréquentielle pour la mesure de rugosité.

Typiquement, la taille éclairée de l'échantillon 3 peut être comprise entre $1mm^2$ et $4cm^2$.

Bien entendu, dans le cas d'une caractérisation de surface pour obtenir une rugosité $\delta$, l'échantillon 3 doit présenter une bonne planéité moyenne.

En effet, par exemple pour un substrat, la planéité doit être telle que l'angle d'incidence d'éclairement local ne doit pas varier de plusieurs degrés.

Le champ d'application en termes de rugosité de surface ou d'hétérogénéité de volume est défini par celui des théories perturbatives (ce qui sera expliqué plus loin); cela signifie que la diffusion doit rester faible devant le flux incident, ou encore que la rugosité reste faible devant la longueur d'onde du rayonnement.

Dans le cas d'une diffusion de volume, l'hétérogénéité devra être faible devant 1. Lorsqu'on s'éloigne de ces conditions, on perd en précision de mesure.

Ainsi, les surfaces optiques (polies, ou à faible flux diffusé) rentrent pleinement dans le domaine d'application de la présente invention, ainsi que les volumes faiblement hétérogènes.

A titre d'exemple, la source de lumière 5 à spectre d'émission continue comprend par exemple une lampe à incandescence, un laser à lumière blanche, une diode à lumière blanche ou bien un laser à super continuum non filtré.

La source de lumière 5 peut être continue ou impulsionnelle. Dans le cas d'une source de lumière 5 impulsionnelle, les calculs se mènent alors différemment pour prendre en compte l'aspect impulsionnel de la source, et l'analyse temporelle du signal diffusé fournit alors les valeurs de rugosité ou d'hétérogénéité, grâce à l'analogie temps/fréquence.

Le dispositif optique 1 de caractérisation comprend de plus un détecteur 7 de la lumière diffusée par l'échantillon, comme par exemple un capteur CCD ou un capteur CMOS tel qu'une caméra. Bien entendu, d'autres détecteurs optiques peuvent être utilisés pour autant qu'ils soient adaptés à la détection de la lumière diffusée, comme par exemple un photomultiplicateur.

Comme on le voit sur la figure 1, la source de lumière 5 émet selon un axe ayant un angle d'incidence d'éclairement $i_0$ par rapport à la perpendiculaire de la surface de l'échantillon 3 et le détecteur 7 détecte la lumière diffusée selon un angle $\theta_0$ d'observation.

La variation de l'angle d'incidence d'éclairement a pour effet de déplacer la bande passante de la mesure sans que la méthode perde en validité.

Pour rappel, la bande passante des fréquences spatiales s'étale entre les valeurs $n_0|\sin(\theta_0)-\sin(i_0)|/\lambda_2$ et $n_0|\sin(\theta_0)+\sin(i_0)|/\lambda_1$, avec $\lambda_1$ et $\lambda_2$ les longueurs d'onde minimale et maximale de la plage d'observation en longueur d'onde de la source. De façon générale la mesure de rugosité garde tout son sens dans la mesure où la bande passante est spécifiée.

Un filtre de pondération spectrale 9 de la lumière émise par la source 5 est disposé sur le chemin optique en amont du détecteur 7 de la lumière diffusée, plus spécifiquement entre l'échantillon 3 et le détecteur 7. Bien entendu, ce filtre de pondération spectrale 9 peut aussi être disposé entre la source de lumière 5 et l'échantillon 3.

Le filtre de pondération 9 possède dans ladite plage d'observation en longueur d'onde une fonction de filtrage spectral T($\lambda$), en réflexion ou transmission, donnée par l'équation suivante :

$$T(\lambda) = \eta \ /[\lambda^3 \ \Psi(i_0, \ \theta_0, \lambda) \ F(\lambda) \ K(\lambda)] \qquad (eq. \ 1)$$

où

- $\eta$ est une constante de proportionnalité,
- $\lambda$ est la longueur d'onde,
- $\theta_0$ est la direction de diffusion de la lumière,
- $i_0$ est l'incidence d'éclairement de l'échantillon par la source de lumière,
- $F(\lambda)$ est la densité spectrale de puissance de la source dans la plage d'observation en longueur d'onde,
- $K(\lambda)$ est la réponse spectrale du détecteur dans la plage d'observation en longueur d'onde,
- $\Psi(1_0, \theta_0, \lambda) = C \ (i_0, \theta_0, \lambda)$ en cas de caractérisation d'une surface de l'échantillon et $\Psi(1_0, \theta_0, \lambda) = D \ (i_0, \theta_0, \lambda)$ , en cas de caractérisation d'un volume de l'échantillon
- $C \ (i_0, \theta_0, \lambda)$ est un coefficient optique donné par les théories perturbatives de la diffusion de la lumière par une surface rugueuse,
- $D \ (i_0, \theta_0, \lambda)$ est un coefficient optique issu cette fois des théories perturbatives de la diffusion par les volumes hétérogènes.

Le filtre de pondération spectrale 9 possède donc une fonction de filtrage spectral T($\lambda$) en réflexion ou transmission qui est proportionnelle à l'inverse de la grandeur donnée par le cube de la longueur d'onde $\lambda$ multiplié par le produit de trois termes qui sont la réponse spectrale K($\lambda$) du détecteur, la densité spectrale de puissance F($\lambda$) de la source et un coefficient optique $\Psi$ ($i_0$, $\theta_0$, $\lambda$).

$\Psi(1_0, \theta_0, \lambda) = C \ (i_0, \theta_0, \lambda)$ en cas de caractérisation d'une surface de l'échantillon et $C \ (i_0, \theta_0, \lambda)$ est donné par les théories perturbatives de la diffusion par une surface rugueuse (ref : Claude Amra, C. Grèzes-Besset, and L. Bruel, "Comparison of surface and bulk scattering in optical multilayers," Appl. Opt. 32, 5492-5503 (1993*)).*

$\Psi(1_0, \theta_0, \lambda) = D \ (i_0, \theta_0, \lambda)$, en cas de caractérisation d'un volume de l'échantillon, et $D \ (i_0, \theta_0, \lambda)$ est donné par les théories perturbatives de la diffusion par des volumes (ref : Claude Amra, C. Grèzes-Besset, and L. Bruel, "Comparison of surface and bulk scattering in optical multilayers, " Appl. Opt. 32, 5492-5503 (1993*)).*

On peut signaler ici qu'une formule approchée peut être utilisée pour ce filtre dans le cas d'une diffusion de surface, en supposant que le coefficient C ($i_0$, $\lambda$) de dépend pas de la direction de diffusion ; dans ce cas, le filtre devient proportionnel au rapport $\lambda$/(FK).

Le détecteur 7 de la lumière diffusée est relié à une unité 11 de traitement du signal de mesure pour extraire la rugosité de la surface ou l'hétérogénéité de l'échantillon 3, comme cela sera décrit plus en détail plus loin.

Comme il ressort de l'équation (eq. 1), le filtre de pondération spectrale est fabriqué de manière spécifique pour une source de lumière 5 et un détecteur 7 de la lumière diffusée.

En effet, l'équation (1) prend en compte la densité spectrale F($\lambda$) de puissance de la source de lumière 5 dans la plage d'observation et la réponse spectrale K($\lambda$) du détecteur 7 dans la plage d'observation en longueur d'onde.

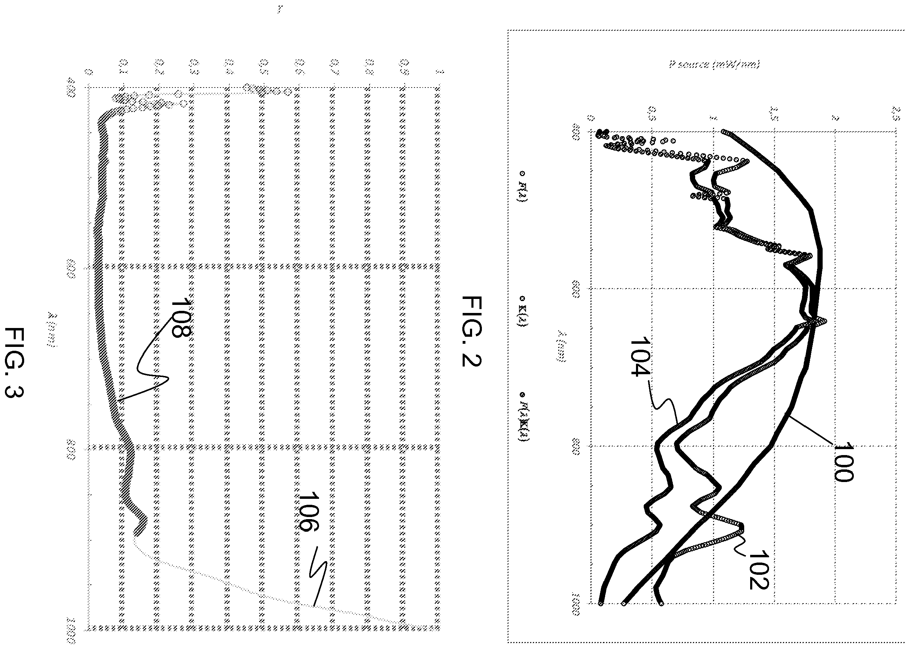

La figure 2 montre sur un graphe en fonction de la longueur d'onde $\lambda$ les variations spectrales relatives d'un exemple d'une source de lumière F($\lambda$) (courbe 100) et celles d'un détecteur K($\lambda$) (courbe 102) de la lumière diffusée ainsi que de leur produit F($\lambda$)*K($\lambda$) (courbe 104).

Ces données sont généralement accessibles par les fiches de données des constructeurs des équipements optiques.

Dans l'exemple de la figure 2, la source de lumière 5 est un laser à super-continuum et le détecteur 7 est un capteur CCD.

A partir de ces données, on peut grâce à l'équation (eq. 1) définir une courbe théorique de réflexion ou de transmission T($\lambda$) qui est tracée en trait fin sur la figure 3 (courbe 106) sur tout le domaine 400nm-1000nm.

A partir d'une telle courbe théorique, on peut concevoir par calcul un filtre de pondération spectrale 9 formé par exemple d'un empilement de couches mince planes. Les techniques de synthèse pour réaliser ce calcul sont bien connues [référence : H. A. Macleod, A. MacLeod, Thin Film Optical Filters, ISBN-13: 9780750306881, 3rd edition, January 2001, Taylor & Francis, Inc. ].

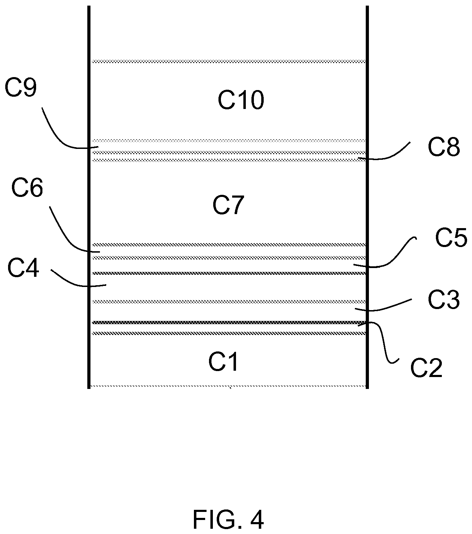

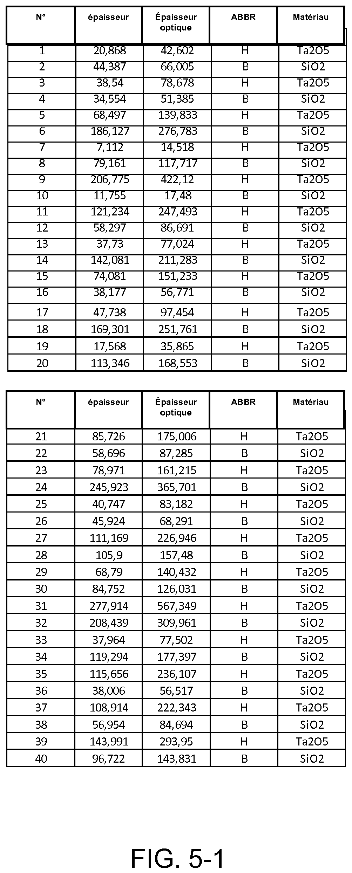

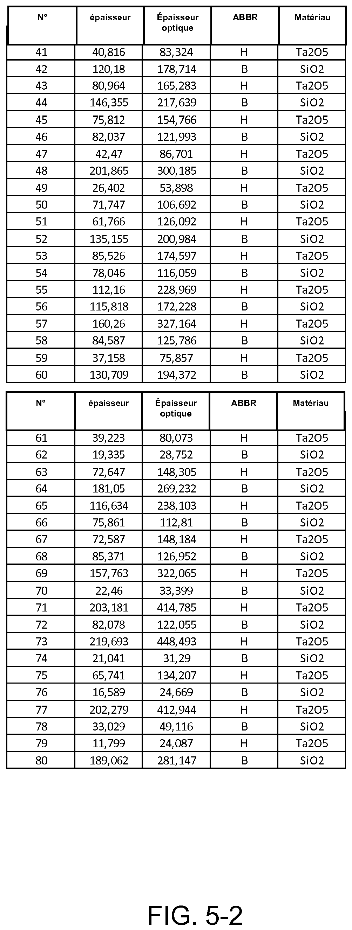

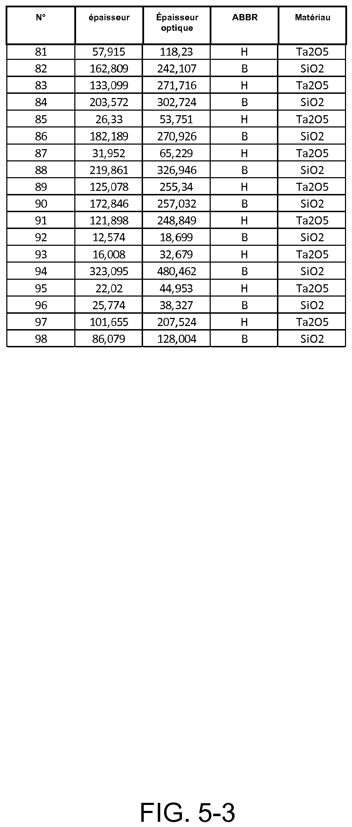

Un exemple des dix premières couches d'un filtre de pondération spectrale 9 est représenté sur la figure 4, la totalité des caractéristiques d'un exemple de filtre de pondération de 98 couches étant reproduit sur la figure 5 (composée des figures 5-1, 5-2 et 5-3) sous forme d'un tableau détaillant dans la première colonne un N° « # » d'ordre des couches ($C_j$ , j étant un nombre entier), en deuxième colonne l'épaisseur physique, en troisième colonne l'épaisseur optique, en quatrième colonne la lettre « H » désigne un matériau d'indice de réfraction haut et la lettre « B » un indice de réfraction bas et en cinquième colonne le matériau constituant la couche N° « #» concernée (dans la cas présent du $Ta_2O_5$ et di $SiO_2$), le filtre de pondération étant traversé par la lumière diffusée depuis la dernière couche (n°98) vers la première couche. On notera cependant que pour ces filtres linéaires et non absorbants, la transmission ne dépend pas du sens de propagation de la lumière.

Ce filtre de pondération spectrale 9 est formé d'un empilement de couches mince planes et parallèles, dans le présente exemple référencées pour les dix première couches sur la figure 4 $C_1$ - $C_{10}$ .

Pour la fabrication d'un tel filtre à couches minces, on peut se référer par exemple à *[P. W. Baumeister, Optical Coating Technology, ISBN: 9780819453136, SPIE Press Book (2004)]*. Les couches $C_j$ sont par exemple déposées les unes sur les autres par des technologies de dépôt de couches minces, comme par exemple du PVD (« physical vapor déposition » en anglais pour dépôt physique en phase vapeur). Bien entendu d'autres technologies spécifiques des couches minces optiques comme par exemple l'évaporation avec ou sans assistance ionique, la pulvérisation par faisceau d'ions, le magnetron sputtering, voire sol-gel sont envisageables.

Dans le présent cas, l'empilement de couches minces comprend au moins un premier matériau ayant un premier indice de réfraction dit bas indice (lettre « B » dans le tableau de la figure 5), par exemple de la silice (indice de réfraction moyen dans le visible $n_{SiO2} \approx 1,487$), et un second matériau dit haut indice (lettre « H » dans le tableau de la figure 5), par exemple de l'oxyde de Tantale (indice de réfraction variant approximativement autour de $n_{Ti2O5} \approx 2,15$ dans le visible), différent du premier indice de réfraction, et disposés en alternance l'un au-dessus de l'autre.

La différence entre le premier et le second indice de réfraction est en particulier supérieure ou égale à 0,4, ici même supérieur à 0,5 et les couches possèdent une épaisseur inférieure à 350nm, notamment comprise entre 20nm et 325nm. Plus la différence entre le premier et le second indice de réfraction est grande, plus le nombre de couches est faible.

Dans le cas où la différence d'indice est plus faible, en augmentant le nombre de couches minces, il est possible d'obtenir des performances analogues. Mais on comprend que le coût d'un filtre de pondération 9 dépend du nombre de couches qui le composent. Par conséquent, il est souhaitable d'avoir une différence d'indice de réfraction, la plus grande possible pour pouvoir diminuer le nombre de couches. Cela dit, les techniques de synthèse d'empilements multicouches requièrent parfois d'utiliser un grand nombre de couches de matériaux d'indices peu différents, en particulier pour éliminer ou réduire d'éventuelles oscillations sur le profil spectral.

Par ailleurs, l'ordre de grandeur des épaisseurs est de façon générale une fraction de la longueur d'onde moyenne dans la plage d'observations en longueur d'onde de la source d'éclairement.

Selon une variante, on peut aussi fabriquer des filtres avec plus de deux matériaux différents, chacun ayant son propre indice de réfraction sans sortir du cadre de la présente invention.

La figure 5 montre sous forme d'un tableau la structure d'un filtre de pondération 9 en indiquant pour chacune des 98 couches que composent le filtre 9 l'épaisseur de la couche en nm et le matériau de la couche concernée.

Avec ces caractéristiques, on obtient un filtre de pondération 9 qui possède une fonction de filtrage $T(\lambda)$ conforme aux spécifications requises pour que la diffusion soit proportionnelle à la rugosité.

Ceci est représenté sur la figure 3 avec la courbe 108 (sous forme de ronds, ou en trait épais) qui montre la transmission T du filtre de pondération 9 selon le tableau de la figure 5 en fonction de la longueur d'onde $\lambda$.

On observe que dans la plage d'observation qui est dans le présent cas compris entre 400nm et 900nm, on obtient une très bonne concordance entre la courbe 106 représentant la courbe théorique de transmission comme expliqué ci-dessus et la courbe 108.

Comme déjà détaillé ci-dessus, le filtre de pondération 9 devra être recalculé dans le cas général, en fonction des caractéristiques de l'étalonnage du système (puissance spectrale de la source, réponse spectrale du détecteur...) et sur une fenêtre spectrale donnée. Pour tous ces cas, les empilements de couches minces permettent de réaliser le filtre recherché.

Pour la caractérisation de surface d'un échantillon, l'unité de traitement 11 comprend par exemple un ordinateur avec un processeur et des mémoires, et est programmée pour extraire la rugosité $\delta$ de la surface de l'échantillon $\delta$ en utilisant la formule suivante :

$$\delta^2 = [v(\theta_0)/(\eta\Delta\Omega)]\ [2\pi(n_0\sin\theta_0)^2] \qquad \text{(eq. 2)}$$

où

- $\theta_0$ - est l'angle de la direction de détection
- $n_0$ est l'indice optique de réfraction du milieu dans lequel s'effectue la mesure (en général l'air, où $n_0 \approx 1$)
- $\Delta\Omega$ est l'angle solide de mesure de la détection
- $\eta$ est la constante de proportionnalité associée précédemment au filtre de pondération
- $v(\theta_0)$ est le signal de diffusion (diffusion de surface) délivré dans la direction $\theta_0$ quand l'échantillon est éclairé avec une source de lumière blanche.

On comprend donc que la rugosité $\delta$ de l'échantillon 3 peut être analysée par une seule mesure, sans balayage spatial ou spectral, ceci sans perdre en précision. On comprend donc que le dispositif de caractérisation selon l'invention permet un gain en temps important tout en délivrant des résultats de mesure fiables et précis.

Pour la caractérisation d'un volume d'un échantillon 3, l'unité de traitement 11 comprend par exemple un ordinateur avec un processeur et des mémoires, et est programmée pour extraire l'hétérogénéité de volume ($\Delta n/n$) de l'échantillon en utilisant la formule suivante :

$$(\Delta n/n)^2 = (1/4)\,[v(\theta_0)/(\eta\Delta\Omega)]\,[2\pi(n_0\sin\theta_0)^2] \qquad (eq.\ 3)$$

où

- $\theta_0$ - est l'angle de la direction de détection
- $n_0$ est l'indice optique de réfraction du milieu dans lequel s'effectue la mesure (en général l'air, où $n_0 \approx 1$)
- $\Delta\Omega$ est l'angle solide de mesure de la détection
- $\eta$ est la constante de proportionnalité associée précédemment au filtre de pondération
- $v(\theta_0)$ est le signal de diffusion (diffusion volumique) délivré dans la direction $\theta_0$ quand l'échantillon est éclairé avec une source de lumière blanche.

On comprend donc que l'hétérogénéité de volume ($\Delta n/n$) de l'échantillon 3 peut être analysée par une seule mesure, sans balayage spatial ou spectral, ceci sans perdre en précision. On comprend donc que le dispositif de caractérisation selon l'invention permet un gain en temps important tout en délivrant des résultats de mesure fiables et précis.

La différence entre les équations (eq. 2) et (eq. 3) réside dans le fait que le filtre de pondération spectrale 9 doit être adapté au cas de diffusion étudié, comme déjà mentionné et expliqué.

Les équations (eq.2) et (eq. 3) peuvent être dérivées de la façon suivante :

1) Cas surfacique (rugosité de surface)

Les théories électromagnétiques perturbatives prévoient que l'intensité monochromatique diffusée dans une direction de l'espace s'écrit dans le plan d'incidence ($\phi = 0°$) comme :

$$I(i_0, \theta_0, \lambda) = C(i_0, \theta_0, \lambda)\,\gamma(\theta_0, \lambda) \qquad (i)$$

Cette relation (i) est donnée en lumière non polarisée, pour des raisons de simplification de la démonstration. $i_0$ et $\theta_0$ sont les directions d'éclairement et de diffusion, et $\lambda$ est la longueur d'onde. La source de lumière 5 est donc ici supposée émettre à une seule longueur d'onde. Dans le cas d'une lumière polarisée, les formules sont très similaires avec un coefficient C légèrement modifié.

Considérons maintenant le cas d'une source de lumière 5 à spectre large de longueurs d'onde, dite blanche, ayant un spectre d'émission continue sur une plage d'observation en longueur d'onde d'au moins 50nm de largeur pour éclairer ledit échantillon 3, avec une densité spectrale de puissance donnée par $F(\lambda)$.

Avec un éclairement produit par cette source de lumière 5, le signal de diffusion v mesuré dans une direction $\theta_0$ est une intégrale sur l'ensemble des longueurs d'onde, soit :

$$v(\theta_0) = \Delta\Omega \int_\lambda C(i_0, \theta_0, \lambda)\,\gamma(\theta_0, \lambda)\,F(\lambda)\,K(\lambda)\,d\lambda \qquad (ii)$$

où $\Delta\Omega$ est l'angle solide de mesure, $K(\lambda)$ est la réponse spectrale du détecteur, et $C(i_0, \theta_0, \lambda)$ un coefficient optique donné par la théorie perturbative de surface.

A noter que ce coefficient $C(i_0, \theta_0, \lambda)$ ne dépend pas de la rugosité de surface, mais uniquement des conditions d'illumination et d'observation, et des indices optiques des milieux (ref : Claude Amra, C. Grèzes-Besset, and L. Bruel, "Comparison of surface and bulk scattering in optical multilayers, " Appl. Opt. 32, 5492-5503 (1993).

On note ici qu'en introduisant un filtre de pondération $T(\lambda)$ en amont du détecteur ou après la source, le signal donné par (ii) s'écrit comme :

$$v(\theta_0) = \Delta\Omega \int_\lambda C(i, \theta_0,\lambda) \, \gamma(\theta_0,\lambda) \, F(\lambda) \, K(\lambda) \, T(\lambda) \, d\lambda \qquad \text{(iii)}$$

A ce stade on voudrait que le signal mesuré soit proportionnel à la rugosité $\delta$ de l'échantillon 3, laquelle est donnée par :

$$\delta^2 = (1/\Sigma) \int_{x,y} h^2(x,y) \, dx \, dy \qquad \text{(iv)}$$

où $h(x,y)$ décrit la topographie de la surface à mesurer, et $\Sigma$ l'aire explorée ou éclairée. Cette rugosité s'écrit aussi dans le plan de Fourier comme :

$$\delta^2 = \int_{\mathbf{v}} \gamma(\mathbf{v}) \, d\mathbf{v} = \int_{v,\phi} \gamma(v,\phi) \, v dv d\phi = 2\pi \int_v v \, \gamma^*(v) \, dv \qquad \text{(v)}$$

où :

- $\gamma(\mathbf{v}) = (1/\Sigma) \, |\hat{h}(\mathbf{v})|^2$ (vi) est le spectre de rugosité de la surface
- $\hat{h}(\mathbf{v})$ est la transformée de Fourier de la surface
- $\mathbf{v} = (v_x, v_y) = v \, (\cos\phi, \sin\phi)$ (vii) est la fréquence spatiale conjuguée de $(x,y)$
- $v = |\mathbf{v}|$ est le module de la fréquence spatiale
- $\gamma^*(v) = (1/2\pi) \int_\phi \gamma(v,\phi) \, d\phi$ (viii) est la moyenne polaire ou azimutale du spectre de rugosité
- $\phi$ est la direction de la fréquence spatiale dans le plan $(v_x,v_y)$

On sait aussi que le module de la fréquence spatiale est lié à l'angle normal de diffusion $\theta_0$ comme :

$$v = n_0 \, \sin\theta_0/\lambda \qquad \text{(ix)}$$

Il faut maintenant comparer les formules (iii) et (v). Pour cela on fait tout d'abord un changement de variable dans l'équation (v), en utilisant l'équation (ix) avec $\lambda$ comme nouvelle variable dans l'intégrale. On obtient :

$$\delta^2 = 2\pi \, ( \, n_0 \, \sin\theta_0)^2 \int_\lambda \gamma(\theta_0,\lambda) \, d\lambda/\lambda^3 \qquad \text{(x)}$$

En comparant alors cette intégrale (x) à l'intégrale (iii), on constate que ces intégrales sont identiques si le filtre de pondération vérifie :

$$C(\theta_0,\lambda) \, F(\lambda) \, K(\lambda) \, T(\lambda) \, = \eta \, / \, \lambda^3 \qquad \text{(xi)}$$

où $\eta$ est une constante de proportionnalité. On a donc :

$$T(\lambda) = \eta \, / \, [\lambda^3 \, C(\theta_0,\lambda) \, F(\lambda) \, K(\lambda)] \qquad \text{(xii)}$$

Ainsi avec un tel filtre de pondération spectrale 9, le signal mesuré en lumière blanche dans une direction est proportionnel à la rugosité de la surface, laquelle se mesure donc aisément après un étalonnage adéquat.

Le fait de modifier l'angle d'incidence ou d'éclairement ne modifie pas la méthode, mais déplace simplement la bande passante de mesure, c'est-à-dire la résolution avec laquelle la rugosité est mesurée ; il s'agit donc d'un degré de liberté qui est un atout supplémentaire et qui permet, le cas échéant, d'ajuster la résolution.

On note cependant que ceci est vrai pour une surface isotrope, pour laquelle le spectre est indépendant de l'angle polaire, à savoir :

$$\gamma^{*}(\nu) = \gamma(\mathbf{v}) = \gamma(\nu) \qquad \text{(xiii)}$$

Si la surface n'est pas isotrope, il suffit, pour une incidence d'éclairement normale et en lumière non polarisée, d'itérer la mesure de diffusion en faisant tourner l'échantillon autour de sa normale, et de réaliser une moyenne des mesures. Ceci fonctionne parce que la transformée de Fourier conserve les rotations. En d'autres termes, faire tourner l'échantillon autour de sa normale fait aussi tourner la fréquence spatiale du même angle.

2) Cas volumique (hétérogénéité de volume)

La méthode est analogue dans le cas volumique, avec pour différences :

a) Un coefficient $D(i_0, \theta_0, \lambda)$ (alors noté $C(i_0, \theta_0, \lambda)$ pour le cas surfacique précédemment) qui est donné par les théories perturbatives de la diffusion par les volumes hétérogènes [(ref : Claude Amra, C. Grèzes-Besset, and L. Bruel, "Comparison of surface and bulk scattering in optical multilayers," Appl. Opt. 32, 5492-5503 (1993)]. A noter ici que les variations aléatoires de l'indice du volume doivent être uniquement transverses (selon x,y), et que la variation en profondeur (selon z) de l'indice peut être exponentielle.
b) Un spectre de permittivité qui doit remplacer le spectre de rugosité. Ceci revient à remplacer la transformée de Fourier du profil de la surface (cas de la rugosité) par la transformée de Fourier des variations normalisées p(x,y) = $\Delta\varepsilon/\varepsilon$ de permittivité $\varepsilon$ dans le volume. L'écart-type normalisé de l'hétérogénéité est alors donné par :

$$<|\Delta n/n|^2> = (1/4) \int_{\mathbf{v}} \gamma(\mathbf{v}) \, d\mathbf{v} \qquad \text{(xiv)}$$

Avec le spectre de permittivité :

$$\gamma(\mathbf{v}) = (1/\Sigma) \, |\hat{p}(\mathbf{v})|^2 \qquad \text{(xv)}$$

Le dispositif 1 optique de caractérisation selon l'invention se distingue donc par la rapidité des mesures, sa compacité et sa simplicité. En effet, ce dispositif optique de caractérisation fonctionne via une mesure unique dans une seule direction d'éclairement ou de diffusion. Aucun balayage, ni en longueur d'onde ni spatial n'est requis.
Le dispositif 1 de caractérisation d'un échantillon 3 peut fonctionner de la façon suivante :
Selon une étape 200, on éclaire l'échantillon 3 avec la source 5 de lumière parallèle ou collimatée ayant un spectre d'émission continue sur une plage d'observation en longueur d'onde d'au moins 50nm de largeur.
Puis selon étape 202, on détecte la lumière diffusée par l'échantillon 3. Le filtre de pondération spectrale 9 ayant les caractéristiques décrites ci-dessus (voir eq. 1) est disposé sur le chemin optique en amont du détecteur 7 de la lumière diffusée.
Selon une étape 204, on extrait un paramètre de caractérisation de l'échantillon 3.
En présence du filtre de pondération spectrale 9 configuré pour une diffusion surfacique, on extrait la rugosité $\delta$ de la surface de l'échantillon 3 en utilisant l'équation (eq. 2).
En présence d'un filtre de pondération spectrale 9 configuré pour une diffusion volumique, on extrait un écart-type normalisé de l'hétérogénéité du volume de l'échantillon ($\Delta n/n$) en utilisant l'équation (eq. 3).

**Revendications**

**1.** Dispositif optique de caractérisation d'un échantillon (3) comprenant

- une source de lumière parallèle ou collimatée (5) ayant un spectre d'émission continue sur une plage d'observation en longueur d'onde d'au moins 50nm de largeur pour éclairer ledit échantillon (3),
- un détecteur (7) de la lumière diffusée par l'échantillon (3), fonctionnant dans ladite plage d'observation en longueur d'onde,
- un filtre de pondération spectrale (9) disposé sur le chemin optique en amont du détecteur (7) de la lumière diffusée, et
- une unité de traitement (11) du signal de mesure pour extraire un paramètre de caractérisation de l'échantillon (3), **caractérisé en ce que** le filtre de pondération spectrale (9) possède dans ladite plage d'observation en longueur d'onde une fonction de filtrage spectral T($\lambda$), en réflexion ou transmission, donnée par l'équation

suivante :

$$T(\lambda) = \eta \,/[\lambda^3 \; \Psi(i_0, \theta_0, \lambda) \; F(\lambda) \; K(\lambda)]$$

où

- $\eta$ est une constante de proportionnalité,
- $\lambda$ est la longueur d'onde,
- $\theta_0$ est la direction de diffusion de la lumière,
- $i_0$ est l'angle l'incidence d'éclairement de l'échantillon par la source de lumière (5),
- $F(\lambda)$ est la densité spectrale de puissance de la source dans la plage d'observation en longueur d'onde,
- $K(\lambda)$ est la réponse spectrale du détecteur dans la plage d'observation en longueur d'onde,
- $\Psi(1_0, \theta_0, \lambda) = C(i_0, \theta_0, \lambda)$ en cas de caractérisation d'une surface de l'échantillon et $\Psi(1_0, \theta_0, \lambda) = D(i_0, \theta_0, \lambda)$, en cas de caractérisation d'un volume de l'échantillon (3),
- $C(i_0, \theta_0, \lambda)$ est un coefficient optique donné par les théories perturbatives de la diffusion de la lumière par une surface rugueuse,
- $D(i_0, \theta_0, \lambda)$ est un coefficient optique issu cette fois des théories perturbatives de la diffusion par les volumes hétérogènes.

2. Dispositif selon la revendication 1, **caractérisé en ce que** la source de lumière (5) est choisie parmi le groupe de sources de lumière suivantes : une lampe à incandescence, un laser à lumière blanche, une diode à lumière blanche ou un laser à super continuum non filtré.

3. Dispositif selon la revendication 1 ou 2, **caractérisé en ce que** le détecteur de la lumière diffusée (7) comprend un capteur CCD ou un capteur CMOS.

4. Dispositif selon l'une quelconque des revendications 1 à 3, **caractérisé en ce que** le filtre de pondération (9) est disposé entre l'échantillon (3) et le détecteur de la lumière diffusée (7), ou bien entre la source de lumière (5) et l'échantillon (3).

5. Dispositif de détection selon l'une quelconque des revendications 1 à 4, **caractérisé en ce que** le filtre de pondération (9) comprend un empilement de couches minces (C1, C2....).

6. Dispositif selon la revendication 5, **caractérisé en ce que** l'empilement de couches minces (C1, C2....) est déposé par des technologies de dépôt de couches semi-conductrices ou de couches minces optiques.

7. Dispositif selon l'une quelconque des revendications 5 à 6, **caractérisé en ce que** l'empilement de couches minces (C1, C2....) comprend au moins un premier matériau ayant un premier indice de réfraction et un second matériau ayant un second indice de réfraction, différent du premier indice de réfraction, et disposés en alternance.

8. Dispositif selon la revendication 7, **caractérisé en ce que** la différence entre le premier et le second indice de réfraction est supérieure ou égale à 0,4.

9. Dispositif selon la revendication 7 ou 8, **caractérisé en ce que** les couches (C1, C2....) possèdent une épaisseur inférieure à 350nm, notamment comprise entre 20nm et 325nm.

10. Dispositif selon l'une quelconque des revendications 7 à 9, **caractérisé en ce que** le premier matériau est du dioxyde de Silicium et le second matériau du pentoxyde de Tantale.

11. Dispositif selon l'une quelconque des revendications 1 à 10, **caractérisé en ce qu'**en présence du filtre de pondération spectrale (9) configuré pour une diffusion surfacique, l'unité de traitement (11) est programmée pour extraire la rugosité $\delta$ de la surface de l'échantillon (3) en utilisant la formule suivante:

$$\delta^2 = [v(\theta_0)/(\eta\Delta\Omega)] \, [2\pi(n_0\sin\theta_0)^2]$$

où

- $\theta_0$ est l'angle de la direction de détection
- $n_0$ est l'indice optique de réfraction du milieu dans lequel s'effectue la mesure (en général l'air, où $n_0 \approx 1$)
- $\Delta\Omega$ est l'angle solide de mesure de la détection
- $\eta$ est la constante de proportionnalité associée précédemment au filtre de pondération
- $v(\theta_0)$ est le signal délivré par le détecteur de diffusion dans la direction $\theta_0$ quand l'échantillon est éclairé avec la source de lumière.

12. Dispositif selon l'une quelconque des revendications 1 à 10, **caractérisé en ce qu'**en présence d'un filtre de pondération spectrale (9) configuré pour une diffusion volumique, l'unité de traitement (11) est programmée pour extraire un écart-type normalisé de l'hétérogénéité du volume de l'échantillon ($\Delta n/n$) en utilisant la formule suivante :

$$(\Delta n/n)^2 = (1/4) \, [v(\theta_0)/(\eta\Delta\Omega)] \, [2\pi(n_0\sin\theta_0)^2]$$

où

- $\theta_0$ est l'angle de la direction de détection
- $n_0$ est l'indice optique de réfraction du milieu dans lequel s'effectue la mesure (en général l'air, où $n_0 \approx 1$)
- $\Delta\Omega$ est l'angle solide de mesure de la détection
- $\eta$ est une constante de proportionnalité,
- $v(\theta_0)$ est le signal délivré par le détecteur de diffusion dans la direction $\theta_0$ quand l'échantillon est éclairé avec la source de lumière.

13. Procédé de caractérisation d'un échantillon (3) comprenant les étapes suivantes :

- on éclaire un échantillon (3) avec une source (5) de lumière parallèle ou collimatée ayant un spectre d'émission continue sur une plage d'observation en longueur d'onde d'au moins 50nm de largeur,
- on détecte la lumière diffusée par l'échantillon (3), un filtre de pondération spectrale (9) étant disposé sur le chemin optique en amont du détecteur (7) de la lumière diffusée, et
- on extrait un paramètre de caractérisation de l'échantillon (3),

**caractérisé en ce que** le filtre de pondération spectrale (9) possède dans ladite plage d'observation en longueur d'onde une fonction de filtrage spectral T($\lambda$), en réflexion ou transmission, donnée par l'équation suivante :

$$T(\lambda) = \eta \, /[\lambda^3 \, \Psi(i_0, \theta_0,\lambda) \, F(\lambda) \, K(\lambda)]$$

où

- $\eta$ est une constante de proportionnalité,
- $\lambda$ est la longueur d'onde,
- $\theta_0$ est la direction de diffusion de la lumière,
- $i_0$ est l'angle d'incidence d'éclairement de l'échantillon par la source de lumière,
- $F(\lambda)$ est la densité spectrale de puissance de la source dans la plage d'observation en longueur d'onde,
- $K(\lambda)$ est la réponse spectrale du détecteur dans la plage d'observation en longueur d'onde,
- $\Psi(1_0, \theta_0,\lambda) = C (i_0, \theta_0,\lambda)$ en cas de caractérisation d'une surface de l'échantillon et $\Psi(1_0, \theta_0,\lambda) = D (i_0, \theta_0,\lambda)$, en cas de caractérisation d'un volume de l'échantillon
- $C (i_0, \theta_0,\lambda)$ est un coefficient optique donné par les théories perturbatives de la diffusion de la lumière par une surface rugueuse,
- $D (i_0, \theta_0,\lambda)$ est un coefficient optique issu cette fois des théories perturbatives de la diffusion par les volumes hétérogènes.

14. Procédé selon la revendication 13, **caractérisé en ce qu'**en présence du filtre de pondération spectrale (9) configuré pour une diffusion surfacique, on extrait la rugosité $\delta$ de la surface de l'échantillon (3) en utilisant la formule suivante:

$$\delta^2 = [v(\theta_0)/(\eta\Delta\Omega)] \, [2\pi(n_0\sin\theta_0)^2]$$

où

- $\theta_0$ est l'angle de la direction de détection
- $n_0$ est l'indice optique de réfraction du milieu dans lequel s'effectue la mesure (en général l'air, où $n_0 \approx 1$)
- $\Delta\Omega$ est l'angle solide de mesure de la détection
- $\eta$ est la constante de proportionnalité associée précédemment au filtre de pondération
- $v(\theta_0)$ est le signal délivré par le détecteur de diffusion dans la direction $\theta_0$ quand l'échantillon est éclairé avec la source de lumière.

15. Procédé selon la revendication 13, caractérisé qu'en présence d'un filtre de pondération spectrale (9) configuré pour une diffusion volumique, on extrait un écart-type normalisé de l'hétérogénéité du volume de l'échantillon ($\Delta n/n$) en utilisant la formule suivante :

$$(\Delta n/n)^2 = (1/4)\,[v(\theta_0)/(\eta\Delta\Omega)]\,[2\pi(n_0\sin\theta_0)^2]$$

où

- $\theta_0$ est l'angle de la direction de détection
- $n_0$ est l'indice optique de réfraction du milieu dans lequel s'effectue la mesure (en général l'air, où $n_0 \approx 1$)
- $\Delta\Omega$ est l'angle solide de mesure de la détection
- $\eta$ est la constante de proportionnalité associée précédemment au filtre de pondération,
- $v(\theta_0)$ est le signal délivré par le détecteur de diffusion dans la direction $\theta_0$ quand l'échantillon est éclairé avec la source de lumière.

**Patentansprüche**

1. Optische Vorrichtung zur Charakterisierung einer Probe (3), die enthält

   - eine parallele oder kollimierte Lichtquelle (5), die ein kontinuierliches Emissionsspektrum auf einen Wellenlängen-Beobachtungsbereich von mindestens 50nm Breite hat, um die Probe (3) zu beleuchten,
   - einen Detektor (7) des von der Probe (3) gestreuten Lichts, der im Wellenlängen-Beobachtungsbereich arbeitet,
   - einen auf dem optischen Weg stromaufwärts vor dem Detektor (7) des gestreuten Lichts angeordneten Spektralgewichtungsfilter (9), und
   - eine Verarbeitungseinheit (11) des Messsignals, um einen Charakterisierungsparameter der Probe (3) zu entnehmen,

   **dadurch gekennzeichnet, dass** der Spektralgewichtungsfilter (9) im Wellenlängen-Beobachtungsbereich eine Spektralfilterfunktion $T(\lambda)$, in Reflexion oder Übertragung, besitzt, die durch die folgende Gleichung geliefert wird:

   $$T(\lambda) = \eta/[\lambda^3\Psi(i_0,\theta_0,\lambda)F(\lambda)K(\lambda)]$$

   wobei

   - $\eta$ eine Proportionalitätskonstante ist,
   - $\lambda$ die Wellenlänge ist,
   - $\theta_0$ die Streurichtung des Lichts ist,
   - $i_0$ der Einfallswinkel der Beleuchtung der Probe durch die Lichtquelle (5) ist,
   - $F(\lambda)$ die Leistungsspektraldichte der Quelle im Wellenlängen-Beobachtungsbereich ist,
   - $K(\lambda)$ die Spektralantwort des Detektors im Wellenlängen-Beobachtungsbereich ist,
   - $\Psi(1_0,\theta_0,\lambda) = C(i_0,\theta_0,\lambda)$ im Fall einer Charakterisierung einer Fläche der Probe und $\Psi(1_0,\theta_0,\lambda) = D(i_0,\theta_0,\lambda)$ im Fall einer Charakterisierung eines Volumens der Probe (3) ist,
   - $C(i_0,\theta_0,\lambda)$ ein durch die Störungstheorien der Streuung des Lichts durch eine raue Fläche gelieferter optischer Koeffizient ist,
   - $D(i_0,\theta_0,\lambda)$ ein optischer Koeffizient ist, der dieses Mal von den Störungstheorien der Streuung durch die heterogenen Volumen stammt.

**2.** Vorrichtung nach Anspruch 1, **dadurch gekennzeichnet, dass** die Lichtquelle (5) aus der Gruppe der folgenden Lichtquellen ausgewählt wird: eine Glühlampe, ein Weißlichtlaser, eine Weißlichtdiode oder ein nicht gefilterter Superkontinuum-Laser.

**3.** Vorrichtung nach Anspruch 1 oder 2, **dadurch gekennzeichnet, dass** der Detektor des gestreuten Lichts (7) einen CCD-Sensor oder einen CMOS-Sensor enthält.

**4.** Vorrichtung nach einem der Ansprüche 1 bis 3, **dadurch gekennzeichnet, dass** der Gewichtungsfilter (9) zwischen der Probe (3) und dem Detektor des gestreuten Lichts (7) oder auch zwischen der Lichtquelle (5) und der Probe (3) angeordnet ist.

**5.** Erfassungsvorrichtung nach einem der Ansprüche 1 bis 4, **dadurch gekennzeichnet, dass** der Gewichtungsfilter (9) einen Stapel aus dünnen Schichten (C1, C2 .... ) enthält.

**6.** Vorrichtung nach Anspruch 5, **dadurch gekennzeichnet, dass** der Stapel aus dünnen Schichten (C1, C2 .... ) durch Technologien des Aufbringens von Halbleiterschichten oder optischen Dünnschichten aufgebracht wird.

**7.** Vorrichtung nach einem der Ansprüche 5 bis 6, **dadurch gekennzeichnet, dass** der Stapel aus dünnen Schichten (C1, C2 .... ) mindestens ein erstes Material mit einem ersten Brechungsindex und ein zweites Material mit einem zweiten Brechungsindex anders als der erste Brechungsindex und abwechselnd angeordnet enthält.

**8.** Vorrichtung nach Anspruch 7, **dadurch gekennzeichnet, dass** der Unterschied zwischen dem ersten und dem zweiten Brechungsindex größer als oder gleich 0,4 ist.

**9.** Vorrichtung nach Anspruch 7 oder 8, **dadurch gekennzeichnet, dass** die Schichten (C1, C2 .... ) eine Dicke von weniger als 350nm besitzen, insbesondere zwischen 20nm und 325nm.

**10.** Vorrichtung nach einem der Ansprüche 7 bis 9, **dadurch gekennzeichnet, dass** das erste Material Siliciumdioxid und das zweite Material Tantalpentoxid ist.

**11.** Vorrichtung nach einem der Ansprüche 1 bis 10, **dadurch gekennzeichnet, dass** in Gegenwart des für eine Flächenstreuung konfigurierten Spektralgewichtungsfilters (9) die Verarbeitungseinheit (11) programmiert ist, die Rauigkeit $\delta$ der Fläche der Probe (3) unter Verwendung der folgenden Formel zu entnehmen:

$$\delta^2 = [v(\theta_0)/(\eta\Delta\Omega)][2\pi(n_0\sin\theta_0)^2]$$

wobei

- $\theta_0$ der Winkel der Erfassungsrichtung ist
- $n_0$ der optische Brechungsindex des Milieus ist, in dem die Messung ausgeführt wird (im Allgemeinen Luft, wobei gilt $n_0 \approx 1$)
- $\Delta\Omega$ der Messraumwinkel der Erfassung ist
- $\eta$ die vorher dem Gewichtungsfilter zugeordnete Proportionalitätskonstante ist
- $v(\theta_0)$ das vom Streudetektor in der Richtung $\theta_0$ gelieferte Signal ist, wenn die Probe mit der Lichtquelle beleuchtet wird.

**12.** Vorrichtung nach einem der Ansprüche 1 bis 10, **dadurch gekennzeichnet, dass** in Gegenwart eines für eine Volumenstreuung konfigurierten Spektralgewichtungsfilters (9) die Verarbeitungseinheit (11) programmiert ist, eine normierte Standardabweichung der Heterogenität des Volumens der Probe ($\Delta n/n$) unter Verwendung der folgenden Formel zu entnehmen:

$$(\Delta n/n)^2 = (1/4)[v(\theta_0)/(\eta\Delta\Omega)][2\pi(n_0\sin\theta_0)^2]$$

wobei

- $\theta_0$ der Winkel der Erfassungsrichtung ist

- $n_0$ der optische Brechungsindex des Milieus ist, in dem die Messung ausgeführt wird (im Allgemeinen Luft, wobei gilt $n_0 \approx 1$)
- $\Delta\Omega$ der Raumwinkel der Messung der Erfassung ist
- $\eta$ eine Proportionalitätskonstante ist,
- $v(\theta_0)$ das vom Streudetektor in der Richtung $\theta_0$ gelieferte Signal ist, wenn die Probe mit der Lichtquelle beleuchtet wird.

13. Verfahren zur Charakterisierung einer Probe (3), das die folgenden Schritte enthält:

- eine Probe (3) wird mit einer Quelle (5) parallelen oder kollimierten Lichts beleuchtet, das ein kontinuierliches Emissionsspektrum über einen Wellenlängen-Beobachtungsbereich von mindestens 50nm Breite hat,
- das von der Probe (3) gestreute Licht wird erfasst, wobei ein Spektralgewichtungsfilter (9) auf dem optischen Weg stromaufwärts vor dem Detektor (7) des gestreuten Lichts angeordnet ist, und
- ein Charakterisierungsparameter wird aus der Probe (3) entnommen,

dadurch gekennzeichnet, dass der Spektralgewichtungsfilter (9) in dem Wellenlängen-Beobachtungsbereich eine Spektralfilterfunktion $T(\lambda)$ in Reflexion oder Übertragung besitzt, die durch die folgende Gleichung geliefert wird:

$$T(\lambda) = \eta/[\lambda^3\Psi(i_0, \theta_0,\lambda)F(\lambda)K(\lambda)]$$

wobei

- $\eta$ eine Proportionalitätskonstante ist,
- $\lambda$ die Wellenlänge ist,
- $\theta_0$ die Streurichtung des Lichts ist,
- $i_0$ der Einfallswinkel der Beleuchtung der Probe durch die Lichtquelle ist,
- $F(\lambda)$ die Leistungsspektraldichte der Quelle im Wellenlängen-Beobachtungsbereich ist,
- $K(\lambda)$ die Spektralantwort des Detektors im Wellenlängen-Beobachtungsbereich ist,
- $\Psi(i_0, \theta_0,\lambda) = C(i_0, \theta_0,\lambda)$ im Fall einer Charakterisierung einer Fläche der Probe und $\Psi(i_0, \theta_0,\lambda) = D(i_0, \theta_0,\lambda)$ im Fall einer Charakterisierung eines Volumens der Probe ist,
- $C(i_0, \theta_0,\lambda)$ ein durch die Störungstheorien der Streuung des Lichts durch eine raue Fläche gelieferter optischer Koeffizient ist,
- $D(i_0, \theta_0,\lambda)$ ein optischer Koeffizient ist, der dieses Mal von den Störungstheorien der Streuung durch die heterogenen Volumen stammt.

14. Verfahren nach Anspruch 13, dadurch gekennzeichnet, dass in Gegenwart des für eine Flächenstreuung konfigurierten Spektralgewichtungsfilters (9) die Rauigkeit $\delta$ der Fläche der Probe (3) unter Verwendung der folgenden Formel entnommen wird:

$$\delta^2 = [v(\theta_0)/(\eta\Delta\Omega)][2\pi(n_0\sin\theta_0)^2]$$

wobei

- $\theta_0$ der Winkel der Erfassungsrichtung ist
- $n_0$ der optische Brechungsindex des Milieus ist, in dem die Messung ausgeführt wird (im Allgemeinen Luft, wobei gilt $n_0 \approx 1$)
- $\Delta\Omega$ der Raumwinkel der Messung der Erfassung ist
- $\eta$ die vorher dem Gewichtungsfilter zugeordnete Proportionalitätskonstante ist
- $v(\theta_0)$ das vom Streudetektor in der Richtung $\theta_0$ gelieferte Signal ist, wenn die Probe mit der Lichtquelle beleuchtet wird.

15. Verfahren nach Anspruch 13, dadurch gekennzeichnet, dass in Gegenwart eines für eine Volumenstreuung konfigurierten Spektralgewichtungsfilters (9) eine normierte Standardabweichung ($\Delta n/n$) der Heterogenität des Volumens der Probe unter Verwendung der folgenden Formel entnommen wird:

$$(\Delta n/n)^2 = (1/4)[v(\theta_0)/(\eta\Delta\Omega)][2\pi(n_0 \sin\theta_0)^2]$$

wobei

• $\theta_0$ der Winkel der Erfassungsrichtung ist
• $n_0$ der optische Brechungsindex des Milieus ist, in dem die Messung ausgeführt wird (im Allgemeinen Luft, wobei gilt $n_0 \approx 1$)
• $\Delta\Omega$ der Raumwinkel der Messung der Erfassung ist
• $\eta$ die vorher dem Gewichtungsfilter zugeordnete Proportionalitätskonstante ist,
• $v(\theta_0)$ das vom Streudetektor in der Richtung $\theta_0$ gelieferte Signal ist, wenn die Probe mit der Lichtquelle beleuchtet wird.

**Claims**

1. Optical device for characterizing a sample (3) comprising

   - a source (5) of parallel or collimated light having a continuous emission spectrum in an observation wavelength range of at least 50 nm width, for illuminating said sample (3),
   - a detector (7) of light scattered by the sample (3), functioning in said observation wavelength range,
   - a spectral weighting filter (9) placed on the optical path upstream of the detector (7) of scattered light, and
   - a unit (11) for processing the measurement signal in order to extract a parameter characterizing the sample (3), **characterized in that** the spectral weighting filter (9) possesses, in said observation wavelength range, in reflection or transmission, a spectral filtering function $T(\lambda)$ given by the following equation:

   $$T(\lambda) = \eta / \left[ \lambda^3 \, \Psi(i_0, \theta_0, \lambda) \, F(\lambda) \, K(\lambda) \right]$$

   where

   - $\eta$ is a constant of proportionality,
   - $\lambda$ is the wavelength,
   - $\theta_0$ is the direction of scatter of the light,
   - $i_0$ is the angle of incidence at which the sample is illuminated by the light source (5),
   - $F(\lambda)$ is the spectral power density of the source in the observation wavelength range,
   - $K(\lambda)$ is the spectral response of the detector in the observation wavelength range,
   - $\Psi(i_0, \theta_0, \lambda) = C(i_0, \theta_0, \lambda)$ in case of characterization of a surface of the sample and $\Psi(i_0, \theta_0, \lambda) = D(i_0, \theta_0, \lambda)$ in case of characterization of a volume of the sample (3),
   - $C(i_0, \theta_0, \lambda)$ is an optical coefficient given by perturbation theories of the scatter of light by a rough surface, and
   - $D(i_0, \theta_0, \lambda)$ is an optical coefficient this time given by perturbation theories of the scatter of light by heterogeneous volumes.

2. Device according to Claim 1, **characterized in that** the light source (5) is chosen from the following group of light sources: an incandescent lamp, a white-light laser, a white-light diode or a non-filtered supercontinuum laser.

3. Device according to Claim 1 or 2, **characterized in that** the detector (7) of scattered light comprises a CCD sensor or a CMOS sensor.

4. Device according to any one of Claims 1 to 3, **characterized in that** the weighting filter (9) is placed between the sample (3) and the detector (7) of scattered light, or between the light source (5) and the sample (3).

5. Detecting device according to any one of Claims 1 to 4, **characterized in that** the weighting filter (9) comprises a stack of thin films (C1, C2...).

6. Device according to Claim 5, **characterized in that** the stack of thin films (C1, C2...) is deposited using technologies for depositing semiconductor films or thin optical films.

7. Device according to any one of Claims 5 to 6, **characterized in that** the stack of thin films (C1, C2...) comprises at least one first material having a first refractive index and one second material having a second refractive index that is different from the first refractive index, said materials being placed in alternation.

8. Device according to Claim 7, **characterized in that** the difference between the first and second refractive index is larger than or equal to 0.4.

9. Device according to Claim 7 or 8, **characterized in that** the films (C1, C2...) possess a thickness smaller than 350 nm and in particular comprised between 20 nm and 325 nm.

10. Device according to any one of Claims 7 to 9, **characterized in that** the first material is silicon dioxide and the second material is tantalum pentoxide.

11. Device according to any one of Claims 1 to 10, **characterized in that**, in the presence of the spectral weighting filter (9) configured for surface scattering, the processing unit (11) is programmed to extract the roughness $\delta$ of the surface of the sample (3) using the following formula:

$$\delta^2 = \left[ v\left(\theta_0\right) / \eta \Delta\Omega \right] \left[ 2\pi \left( n_0 \sin\theta_0 \right)^2 \right]$$

where

- $\theta_0$ is the angle of the detection direction,
- $n_0$ is the optical refractive index of the medium in which the measurement is carried out (in general air, so $n_0 \approx 1$),
- $\Delta\Omega$ is the solid angle of the detection measurement,
- $\eta$ is the constant of proportionality precedingly associated with the weighting filter, and
- $v(\theta_0)$ is the signal delivered by the detector of scatter in the direction $\theta_0$ when the sample is illuminated with the light source.

12. Device according to any one of Claims 1 to 10, **characterized in that**, in the presence of a spectral weighting filter (9) configured for volume scattering, the processing unit (11) is programmed to extract a normalized standard deviation of the heterogeneity of the volume of the sample ($\Delta n/n$) using the following formula:

$$\left(\Delta n/n\right)^2 = \left(1/4\right) \left[ v\left(\theta_0\right) / \eta \Delta\Omega \right] \left[ 2\pi \left( n_0 \sin\theta_0 \right)^2 \right]$$

where

- $\theta_0$ is the angle of the detection direction,
- $n_0$ is the optical refractive index of the medium in which the measurement is carried out (in general air, so $n_0 \approx 1$),
- $\Delta\Omega$ is the solid angle of the detection measurement,
- $\eta$ is a constant of proportionality, and
- $v(\theta_0)$ is the signal delivered by the detector of scatter in the direction $\theta_0$ when the sample is illuminated with the light source.

13. Method for characterizing a sample (3) comprising the following steps:

- a sample (3) is illuminated with a source (5) of parallel or collimated light having a continuous emission spectrum in an observation wavelength range of at least 50 nm width,
- light scattered by the sample (3) is detected, a spectral weighting filter (9) being placed on the optical path upstream of the detector (7) of scattered light, and
- a parameter characterizing the sample (3) is extracted,

**characterized in that** the spectral weighting filter (9) possesses, in said observation wavelength range, in reflection or transmission, a spectral filtering function $T(\lambda)$ given by the following equation:

$$T\left(\lambda\right) = \eta / \left[ \lambda^3 \, \Psi\left(i_0, \theta_0, \lambda\right) F\left(\lambda\right) K\left(\lambda\right) \right]$$

where

- $\eta$ is a constant of proportionality,
- $\lambda$ is the wavelength,
- $\theta_0$ is the direction of scatter of the light,
- $i_0$ is the angle of incidence at which the sample is illuminated by the light source,
- $F(\lambda)$ is the spectral power density of the source in the observation wavelength range,
- $K(\lambda)$ is the spectral response of the detector in the observation wavelength range,
- $\Psi(i_0, \theta_0, \lambda) = C(i_0, \theta_0, \lambda)$ in case of characterization of a surface of the sample and $\Psi(i_0, \theta_0, \lambda) = D(i_0, \theta_0, \lambda)$ in case of characterization of a volume of the sample,
- $C(i_0, \theta_0, \lambda)$ is an optical coefficient given by perturbation theories of the scatter of light by a rough surface, and
- $D(i_0, \theta_0, \lambda)$ is an optical coefficient this time given by perturbation theories of scatter by heterogeneous volumes.

14. Method according to Claim 13, **characterized in that** in the presence of the spectral weighting filter (9) configured for surface scattering, the roughness $\delta$ of the surface of the sample (3) is extracted using the following formula:

$$\delta^2 = \left[ v(\theta_0)/\eta \Delta \Omega \right] \left[ 2\pi \left( n_0 \sin \theta_0 \right)^2 \right]$$

where

- $\theta_0$ is the angle of the detection direction,
- $n_0$ is the optical refractive index of the medium in which the measurement is carried out (in general air, so $n_0 \approx 1$),
- $\Delta \Omega$ is the solid angle of the detection measurement,
- $\eta$ is the constant of proportionality precedingly associated with the weighting filter, and
- $v(\theta_0)$ is the signal delivered by the detector of scatter in the direction $\theta_0$ when the sample is illuminated with the light source.

15. Method according to Claim 13, **characterized in that** in the presence of a spectral weighting filter (9) configured for volume scattering, a normalized standard deviation of the heterogeneity ($\Delta n/n$) of the volume of the sample is extracted using the following formula:

$$\left( \Delta n/n \right)^2 = \left( 1/4 \right) \left[ v(\theta_0)/\eta \Delta \Omega \right] \left[ 2\pi \left( n_0 \sin \theta_0 \right)^2 \right]$$

where

- $\theta_0$ is the angle of the detection direction,
- $n_0$ is the optical refractive index of the medium in which the measurement is carried out (in general air, so $n_0 \approx 1$),
- $\Delta \Omega$ is the solid angle of the detection measurement,
- $\eta$ is the constant of proportionality precedingly associated with the weighting filter, and

$v(\theta_0)$ is the signal delivered by the detector of scatter in the direction $\theta_0$ when the sample is illuminated with the light source.

FIG. 1

FIG. 2

FIG. 3

FIG. 4

| N° | épaisseur | Épaisseur optique | ABBR | Matériau |
|----|-----------|-------------------|------|----------|
| 1 | 20,868 | 42,602 | H | Ta2O5 |
| 2 | 44,387 | 66,005 | B | SiO2 |
| 3 | 38,54 | 78,678 | H | Ta2O5 |
| 4 | 34,554 | 51,385 | B | SiO2 |
| 5 | 68,497 | 139,833 | H | Ta2O5 |
| 6 | 186,127 | 276,783 | B | SiO2 |
| 7 | 7,112 | 14,518 | H | Ta2O5 |
| 8 | 79,161 | 117,717 | B | SiO2 |
| 9 | 206,775 | 422,12 | H | Ta2O5 |
| 10 | 11,755 | 17,48 | B | SiO2 |
| 11 | 121,234 | 247,493 | H | Ta2O5 |
| 12 | 58,297 | 86,691 | B | SiO2 |
| 13 | 37,73 | 77,024 | H | Ta2O5 |
| 14 | 142,081 | 211,283 | B | SiO2 |
| 15 | 74,081 | 151,233 | H | Ta2O5 |
| 16 | 38,177 | 56,771 | B | SiO2 |
| 17 | 47,738 | 97,454 | H | Ta2O5 |
| 18 | 169,301 | 251,761 | B | SiO2 |
| 19 | 17,568 | 35,865 | H | Ta2O5 |
| 20 | 113,346 | 168,553 | B | SiO2 |

| N° | épaisseur | Épaisseur optique | ABBR | Matériau |
|----|-----------|-------------------|------|----------|
| 21 | 85,726 | 175,006 | H | Ta2O5 |
| 22 | 58,696 | 87,285 | B | SiO2 |
| 23 | 78,971 | 161,215 | H | Ta2O5 |
| 24 | 245,923 | 365,701 | B | SiO2 |
| 25 | 40,747 | 83,182 | H | Ta2O5 |
| 26 | 45,924 | 68,291 | B | SiO2 |
| 27 | 111,169 | 226,946 | H | Ta2O5 |
| 28 | 105,9 | 157,48 | B | SiO2 |
| 29 | 68,79 | 140,432 | H | Ta2O5 |
| 30 | 84,752 | 126,031 | B | SiO2 |
| 31 | 277,914 | 567,349 | H | Ta2O5 |
| 32 | 208,439 | 309,961 | B | SiO2 |
| 33 | 37,964 | 77,502 | H | Ta2O5 |
| 34 | 119,294 | 177,397 | B | SiO2 |
| 35 | 115,656 | 236,107 | H | Ta2O5 |
| 36 | 38,006 | 56,517 | B | SiO2 |
| 37 | 108,914 | 222,343 | H | Ta2O5 |
| 38 | 56,954 | 84,694 | B | SiO2 |
| 39 | 143,991 | 293,95 | H | Ta2O5 |
| 40 | 96,722 | 143,831 | B | SiO2 |

# FIG. 5-1

| N° | épaisseur | Épaisseur optique | ABBR | Matériau |
|----|-----------|-------------------|------|----------|
| 41 | 40,816 | 83,324 | H | Ta2O5 |
| 42 | 120,18 | 178,714 | B | SiO2 |
| 43 | 80,964 | 165,283 | H | Ta2O5 |
| 44 | 146,355 | 217,639 | B | SiO2 |
| 45 | 75,812 | 154,766 | H | Ta2O5 |
| 46 | 82,037 | 121,993 | B | SiO2 |
| 47 | 42,47 | 86,701 | H | Ta2O5 |
| 48 | 201,865 | 300,185 | B | SiO2 |
| 49 | 26,402 | 53,898 | H | Ta2O5 |
| 50 | 71,747 | 106,692 | B | SiO2 |
| 51 | 61,766 | 126,092 | H | Ta2O5 |
| 52 | 135,155 | 200,984 | B | SiO2 |
| 53 | 85,526 | 174,597 | H | Ta2O5 |
| 54 | 78,046 | 116,059 | B | SiO2 |
| 55 | 112,16 | 228,969 | H | Ta2O5 |
| 56 | 115,818 | 172,228 | B | SiO2 |
| 57 | 160,26 | 327,164 | H | Ta2O5 |
| 58 | 84,587 | 125,786 | B | SiO2 |
| 59 | 37,158 | 75,857 | H | Ta2O5 |
| 60 | 130,709 | 194,372 | B | SiO2 |

| N° | épaisseur | Épaisseur optique | ABBR | Matériau |
|----|-----------|-------------------|------|----------|
| 61 | 39,223 | 80,073 | H | Ta2O5 |
| 62 | 19,335 | 28,752 | B | SiO2 |
| 63 | 72,647 | 148,305 | H | Ta2O5 |
| 64 | 181,05 | 269,232 | B | SiO2 |
| 65 | 116,634 | 238,103 | H | Ta2O5 |
| 66 | 75,861 | 112,81 | B | SiO2 |
| 67 | 72,587 | 148,184 | H | Ta2O5 |
| 68 | 85,371 | 126,952 | B | SiO2 |
| 69 | 157,763 | 322,065 | H | Ta2O5 |
| 70 | 22,46 | 33,399 | B | SiO2 |
| 71 | 203,181 | 414,785 | H | Ta2O5 |
| 72 | 82,078 | 122,055 | B | SiO2 |
| 73 | 219,693 | 448,493 | H | Ta2O5 |
| 74 | 21,041 | 31,29 | B | SiO2 |
| 75 | 65,741 | 134,207 | H | Ta2O5 |
| 76 | 16,589 | 24,669 | B | SiO2 |
| 77 | 202,279 | 412,944 | H | Ta2O5 |
| 78 | 33,029 | 49,116 | B | SiO2 |
| 79 | 11,799 | 24,087 | H | Ta2O5 |
| 80 | 189,062 | 281,147 | B | SiO2 |

# FIG. 5-2

| N° | épaisseur | Épaisseur optique | ABBR | Matériau |
|---|---|---|---|---|
| 81 | 57,915 | 118,23 | H | Ta2O5 |
| 82 | 162,809 | 242,107 | B | SiO2 |
| 83 | 133,099 | 271,716 | H | Ta2O5 |
| 84 | 203,572 | 302,724 | B | SiO2 |
| 85 | 26,33 | 53,751 | H | Ta2O5 |
| 86 | 182,189 | 270,926 | B | SiO2 |
| 87 | 31,952 | 65,229 | H | Ta2O5 |
| 88 | 219,861 | 326,946 | B | SiO2 |
| 89 | 125,078 | 255,34 | H | Ta2O5 |
| 90 | 172,846 | 257,032 | B | SiO2 |
| 91 | 121,898 | 248,849 | H | Ta2O5 |
| 92 | 12,574 | 18,699 | B | SiO2 |
| 93 | 16,008 | 32,679 | H | Ta2O5 |
| 94 | 323,095 | 480,462 | B | SiO2 |
| 95 | 22,02 | 44,953 | H | Ta2O5 |
| 96 | 25,774 | 38,327 | B | SiO2 |
| 97 | 101,655 | 207,524 | H | Ta2O5 |
| 98 | 86,079 | 128,004 | B | SiO2 |

# FIG. 5-3

FIG. 6

## RÉFÉRENCES CITÉES DANS LA DESCRIPTION

**Documents brevets cités dans la description**

- WO 2006063094 A1
- WO 2015116153 A1
- US 2014262027 A1

**Littérature non-brevet citée dans la description**

- **CLAUDE AMRA ; C. GRÈZES-BESSET ; L. BRUEL.** Comparison of surface and bulk scattering in optical multilayers,. *Appl. Opt.,* 1993, vol. 32, 5492-5503
- **CLAUDE AMRA ; C. GRÈZES-BESSET ; L. BRUEL.** Comparison of surface and bulk scattering in optical multilayers. *Appl. Opt.,* 1993, vol. 32, 5492-5503
- **H. A. MACLEOD ; A. MACLEOD.** Thin Film Optical Filters. Taylor & Francis, Inc, Janvier 2001
- **P. W. BAUMEISTER.** Optical Coating Technology. SPIE Press Book, 2004